# EUROPEAN PATENT APPLICATION

(11) **EP 4 094 921 A1**
(43) Date of publication of application: **30.11.2022**
(21) Application number: 21176235.6
(22) Date of filing: 27.05.2021
(51) Int. Cl.: B29C 45/73, B29C 33/04, B29C 45/26, F16L 55/11

(54) **DEVICE WITH SEAL FOR CLOSING HOLES AGAINST THE PASSAGE OF A MEDIUM**

(71) Applicant: Stack Mold Plus UG (haftungsbeschränkt), 63868 Großwallstadt (DE)
(72) Inventor: Wolf, Manfred, 63785 Obernburg am Main (DE)

(57) **Abstract**

A threaded device with seal used especially in cooling / heating circuits or in hydraulic circuits preventing closing holes against the passage of a medium. The device comprises a plug having a thread, a seal, and a means to screw in (eg. Hexagon/Torx or other means), along with a chamfer for easier installation which can be made between 0° < 90° for a slanted sealing. The invention presents no protrusion of the screw plug over the tool edge, allowing unrestricted a pressure less or greater than ambient pressure and across the entire temperature range.

## Description

### Field of the Invention

This invention is generally related to the field of plastic injection moulding, a production method of plastic items, for which plastic granulate is melted down and injected into the hollow cavity of a mould. The molten plastic is cooled/heated by a temperature control system, so that the injected part can be removed from the mould. This production method is best suited for the mass production of plastic components of every kind.

Normally, an injection moulding tool contains two mould halves: a nozzle side and an ejector side. Inside the mould halves are the gating system, the cavity inserts, the slide, the ejector elements and the cooling unit. More specifically, due to the molten plastic granulate; a high degree of warmth is produced in the entire mould, which results in long cycle times, but which can be greatly reduced through cooling. Therefore, cooling circuits are created with the help of drill holes and plugs in order to cool down partial areas of the mould.

Hydraulic holes connect hydraulic cylinders, which are mounted in the ejector packet or the mould plate, and which push the entire ejector packet to the front when the tool is opened. The closed circle with supply and return to the cylinders creates sufficient pressure in order to eject the finished component during extension.

Closing and sealing the hydraulic and cooling / heating holes is necessary for flawless functioning during the pressure build-up of the hydraulic cylinder and the cooling / heating of the mould.

### Description of Prior Art

The previously known solutions for the technical field in question are, by their commercial names: Meusburger: E7140 - a screw plug with collar, made of steel, Hasco: Z941, Knarr: 70941, Ganter: GN749.

The main disadvantages of the previously known solutions are lack of space due to the total length (approx. 100% longer) and also the protruding closure head, possibly only the sealing region being sunk in the plate.

The specific technical problems concerning the previous solution solved by the present invention are:
- the long screw-in depth hinders the insertion of connecting holes, which are absolutely necessary in places with very little space in the tool, e.g. to other holes or to the tool edge.
- in case several drill holes are placed close to each other, the head diameter can also cause lack of space as it needs to be screwed in deeper and could therefore cause collision or the minimum spacing to other drill holes cannot be respected.

### Summary of the Invention

It is one of the primary objects of the present invention to ensure that the circuit holes are closed and securely sealed. They are created through several individual holes and together lead to one or more circuits through which a medium (water, oil or similar) passes and is used for cooling / heating a mold or other equipment.

It can also be used in high pressure hydraulic circuits. Closing the holes and sealing is done through the sealing surfaces between 0° < 90°, the threaded plug with seal, and threaded stepped hole that has a chamfer for easier installation, which ensures the correct operation of the cooling circuits and hydraulic. The groove care in which the sealing / gasket is located prevents the sealing / gasket from being destroyed when tightening or screwing.

Further objects of the invention will be brought out in the following part of the specification, wherein detailed description is for the purpose of fully disclosing the invention without placing limitations thereon.

### Brief description of the drawings

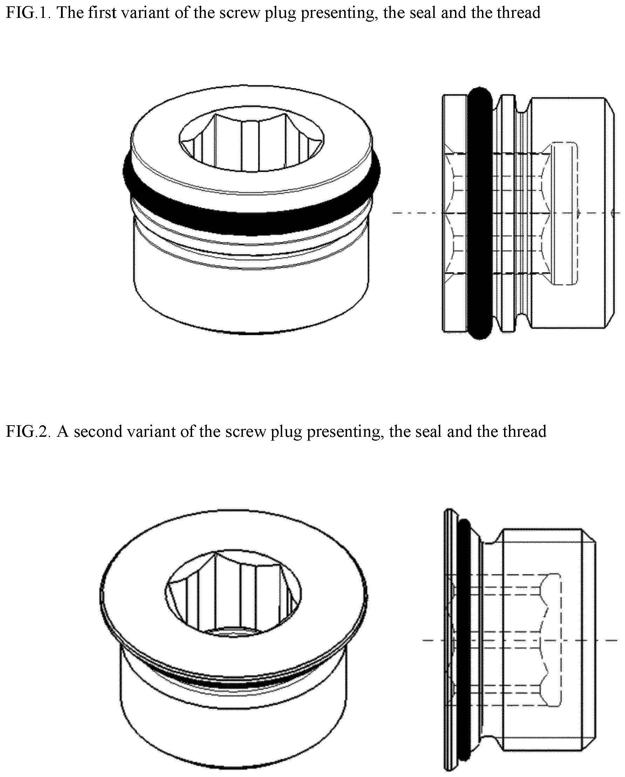

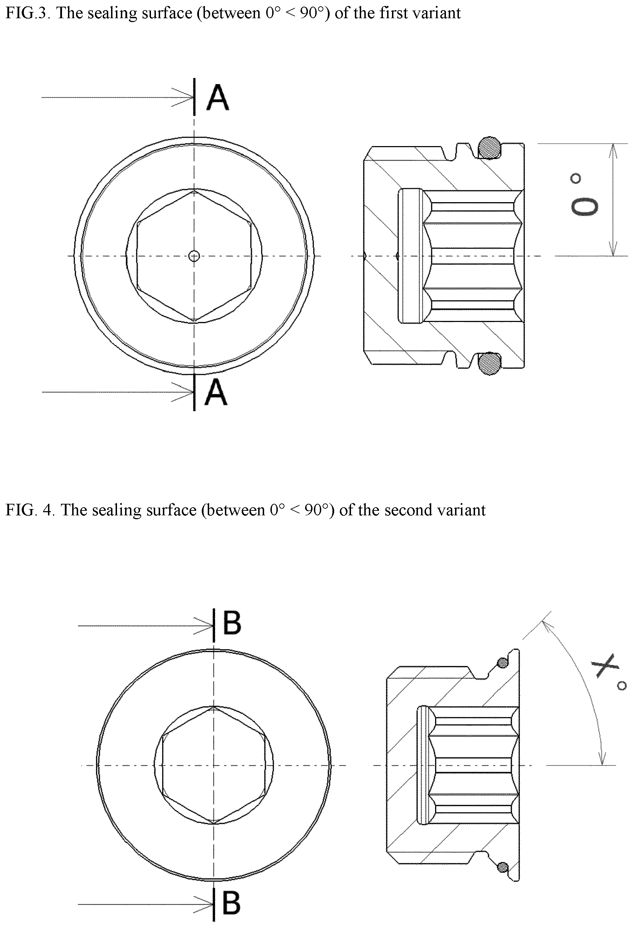

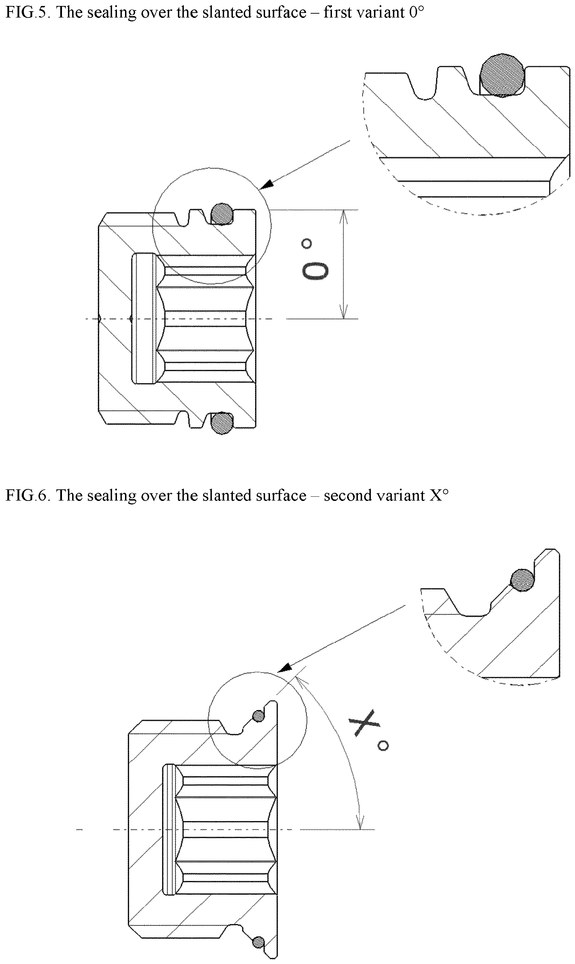

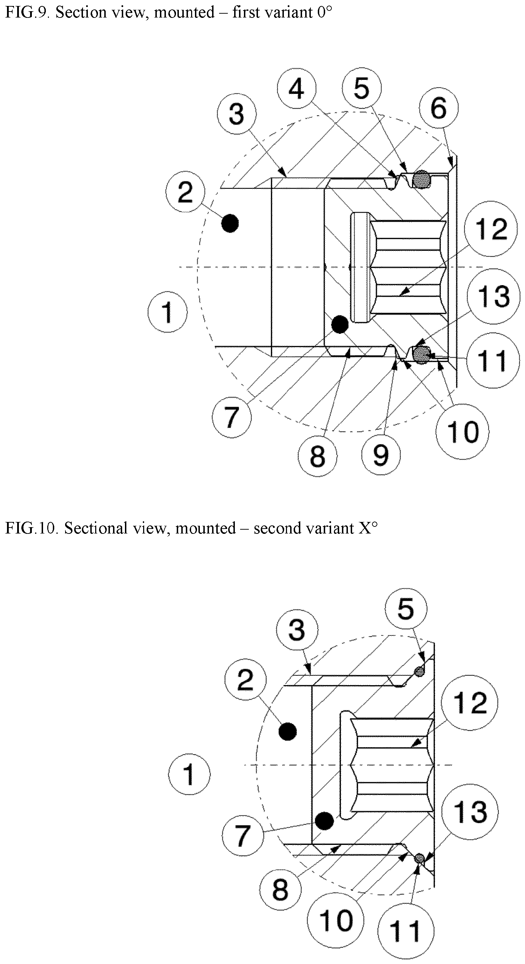

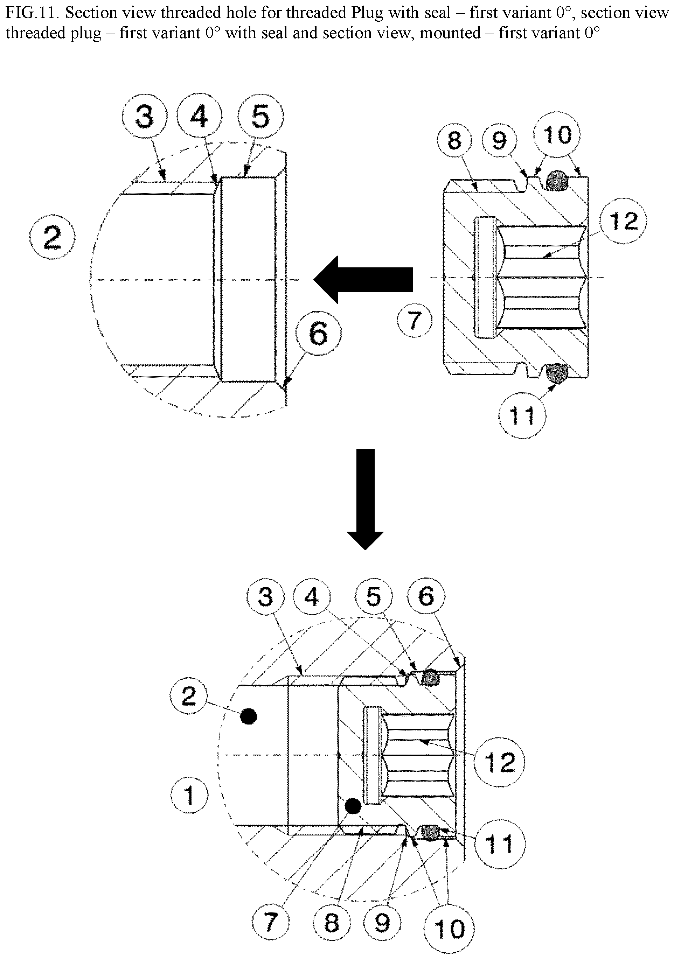

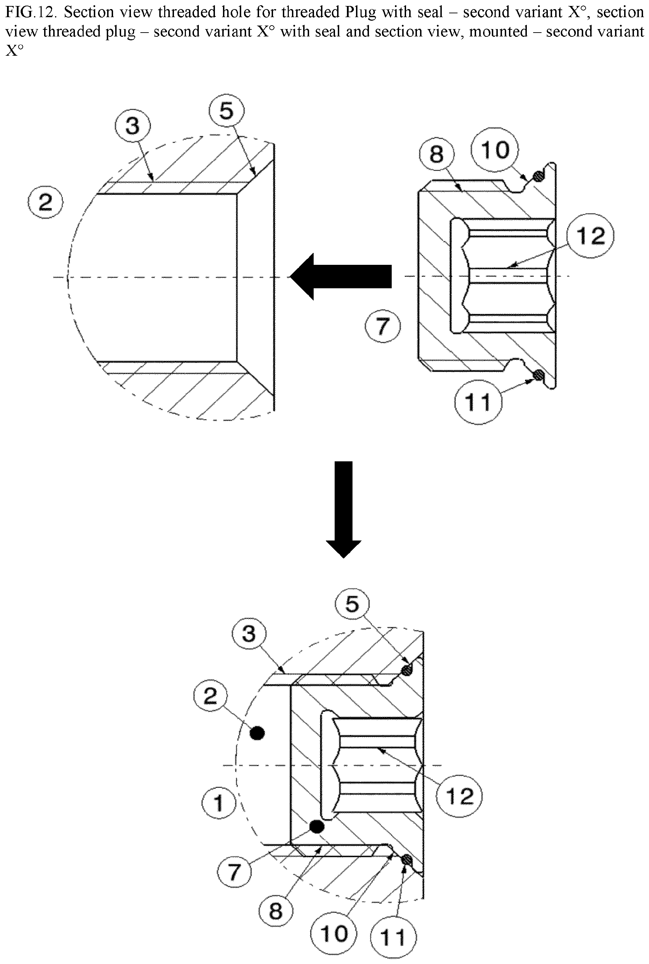

With the above and other related objects in view, the invention consists in the details of construction and combination of parts as will be more fully understood from the following description, when read in conjunction with the accompanying drawings in which:
∘ FIG. 1 provides an illustration of a variant of the threaded plug with seal, the seal and the thread
∘ FIG. 2 illustrates the characteristics of another variant of the threaded plug with seal, the seal and the thread
∘ FIG. 3 provides an illustration of the sealing surface between 0° < 90° of the first variant
∘ FIG. 4 an illustration of the sealing surface between 0° < 90° of another variant
∘ FIG. 5, 6, 7, 8, provide an illustration of the sealing over the slanted surface with no protruding head for both variants, from different views and angles
∘ FIG.9. Section view, mounted - first variant 0°
∘ FIG. 10. Section view, mounted - second variant X°
∘ FIG. 11. Section view threaded hole, section view threaded plug and section view mounted - first variant 0°
∘ FIG.12. Section view threaded hole, section view threaded plug and section view mounted - first variant X°

Reference numbers:
① Threaded plug with seal, mounted
② Stepped and threaded hole and chamfered thread (for sealed threaded plug)
③ Inner thread (threaded hole)
④ Slanted
⑤ Sealing surface
⑥ Chamfer for mounting
⑦ Threaded plug with seal
⑧ External thread (threaded plug with seal)
⑨ Sealing edge
⑩ Sealing surface between 0° < 90°
⑪ Sealing / gasket
⑫ Inner hexagon/Torx
⑬ Groove for sealing / gasket

### Detailed description of the invention

Closing and sealing the hydraulic and cooling / heating holes is necessary for flawless functioning during the pressure build-up of the hydraulic cylinder and the cooling / heating of the mould.

The operating principle of the present invention is that the threaded plug with seal is much more compact in terms of its dimensions compared to state-of-the-art solutions. This is possible by the presence of the collar that is used as a slanted sealing surface between 0° < 90° and is provided with a groove. In the groove there is a seal, which can be elastic or plastic. In order to be able to assemble them, means for screwing and a thread are available. The threaded plug with seal ensures the sealing function when screwing in, thanks to the groove and the seal, which is located in the variable sealing surface between 0° < 90° of the collar. That is the reason why the drawings present two variants of the threaded plug, one for an angle of 0° and the other for an angle of 45°, but it can be manufactured for any angle between 0° < 90°.

By tightening the threaded plug, the seal is pressed from the bore surface into the groove or against the variable sealing surface between 0° < 90° of the plug so that they mutually adapt to their surface structure and thus do not let any medium through.

The object of the present invention is to ensure that the circuit holes are closed and securely sealed. They are created through several individual holes and together lead to one or more circuits through which an environment (water, oil, steam or similar) passes and is used for cooling / heating a mold or other equipment.

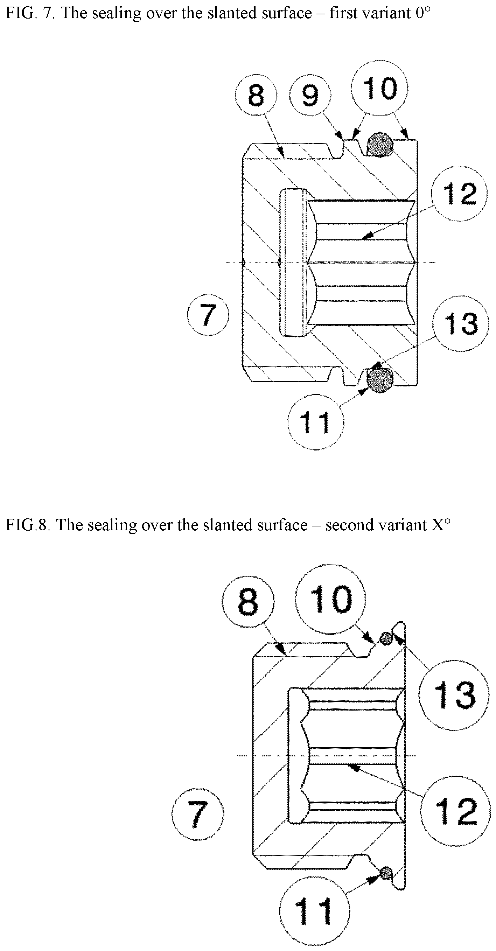

The solution can also be used in high pressure hydraulic circuits. Closing the holes and sealing is done through the sealing surfaces (⑤, ⑩, FIG. 7, 8, 9, 10), between 0° < 90 °, through the threaded plug with seal (⑦, FIG. 7, 8) and the threaded and stepped hole that has a chamfer for easier installation (②, FIG. 11, 12), which ensures the correct operation of the cooling / heating circuits and hydraulic systems. The groove (⑬, FIG. 7, 8) in which the sealing ring / gasket is located (⑪, FIG. 7, 8) prevents the sealing ring / gasket from being extinguished when tightening or screwing.

The threaded plug with seal (⑦, FIG. 7, 8) has a sealing ring / gasket (⑪, FIG. 7, 8) mounted which is screwed into a hole with thread and a chamfer (②, FIG. 11, 12)

The outer thread (⑧, FIG. 7, 8) from the sealed threaded plug (⑦, FIG. 7, 8) corresponds to the inner thread (③, FIG. 11, 12) and a hexagonal/TORX key corresponds to the inner hexagon/TORX, used for screwing (⑫, FIG. 7, 8).

While screwing in the sealing screw plug (⑦, FIG. 7, 8), the sealing edge (⑨, FIG.7) is pressed on the chamfer (④, FIG. 11) and partially closes the hole.

When pressure is accumulated in the circuits, the gasket (⑪, FIG. 7, 8) deforms so that it is pressed in the space between (⑤ and ⑩, FIG. 11, 12). Now it can be completely sealed and does not allow any medium to pass (e.g. water, oil, steam or something similar).

By tightening, the sealing can be done through the sealing surfaces (⑤ and ⑩ FIG. 11, 12) and the sealing (⑪, FIG. 7, 8). But only when the threaded plug (⑦, FIG. 7, 8) is completely screwed into the step hole (②, FIG. 11, 12), the sealing ring / gasket (⑪, FIG. 7, 8) is tightened between the sealing surfaces. The sealing ring / gasket fits between them and does not allow any medium to pass (e.g. water, oil, steam or something similar) (FIG. 11, 12).

The present invention provides improved sealing on the variable sealing surfaces (0°-90°) - e.g. closing a cooling or hydraulic circuit, approximative 20% smaller diameter, no protrusion of the screw plug over the tool edge, despite the reduced total length, approximative 40% economy of the total length compared to state-of-the-art, but nonetheless sufficient the same maximum pressure (up to 400 bar).

The present invention is extremely compact designed, has multiple use compared to previous solutions with seal, the seal provides complete sealing after disconnection and greater quantities can be produced from the same amount of material.

The present invention provides higher heat resistance compared to previous solutions from the state-of-the-art (up to 200°C) and is designed for pressures up to 400 bar, despite the compact dimensions of its diameter and length.

The foregoing description conveys the best understanding of the objectives and advantages of the present invention. Different embodiments may be made of the inventive concept of this invention. It is to be understood that all matter disclosed herein is to be interpreted merely as illustrative, and not in a limiting sense.

## Claims

1. Threaded device (⑦, FIG. 7, 8) for sealing and protecting a threaded hole (②, FIG. 11, 12), preventing debris, other extraneous bodies, liquids or steam from entering or discharge said hole, device comprising a threaded plug with seal (⑦, FIG. 7, 8) and a sealing ring/gasket (⑪, FIG. 7, 8), a threaded stepped hole (②, FIG. 11, 12) with a chamfer (④, FIG. 11), a hexagonal/Trox (⑫, FIG. 7, 8) socket for screwing and a groove (⑬, FIG. 7, 8) in which the sealing ring/gasket (⑪, FIG. 7, 8) is located, preventing it from being destroyed when tightening or screwing. The threaded device (⑦, FIG. 7, 8) is also provided with an outer thread (⑧, FIG. 7, 8) from the sealed threaded plug that corresponds to the inner thread (③, FIG. 11, 12), along with a hexagonal/Torx key that corresponds to the inner hexagonal/Torx (⑫, FIG. 7, 8) section for screwing. The threaded device (⑦, FIG. 7, 8) set forth in claim 1 wherein the sealing (⑪, FIG. 7, 8) is done through the sealing surfaces (⑤, FIG. 11, 12) between 0 °< 90 °.

2. Threaded device (⑦, FIG. 7, 8) set forth in claim 1 wherein the sealing (⑤ and ⑩, FIG. 11, 12) is done through the sealing surfaces (⑤, FIG. 11, 12) between 0° < 90 °.

3. Threaded device (⑦, FIG. 7, 8) set forth in claim 1 and 2 wherein the plug is made up from a different material with a collar. The seal (⑪, FIG. 7, 8) is made of plastic or elastic/rubber material and is incorporatetd in the collar (⑩, FIG. 11, 12).

4. Threaded device (⑦, FIG. 7, 8) set forth in claim 1 and 2 and 3 **characterized in that** it resists pressure less or greater than ambient pressure and across the entire temperature range.

5. Method of use of a threaded device (⑦, FIG. 7, 8) for sealing and protecting a threaded hole (②, FIG. 11,12), preventing debris and other extraneous bodies, liquids or steam from entering or discharge said hole, according to the claims 1 - 4. The threaded (⑦, FIG. 7, 8) device comprises a threaded plug with seal (⑦, FIG. 7, 8) and a sealing ring/gasket (⑪, FIG. 7, 8), a threaded stepped hole (②, FIG. 11, 12) with a chamfer (④, FIG. 11), a hexagonal/Torx (⑫, FIG. 7, 8) socket for screwing and a groove (⑬, FIG. 7, 8) in which the sealing ring/gasket (⑪, FIG. 7, 8) is located, preventing it from being destroyed when tightening or screwing. The threaded (⑦, FIG. 7, 8) device is also provided with an outer thread (⑧, FIG. 7, 8) from the sealed threaded plug (⑦, FIG. 7, 8) that corresponds to the inner thread (③, FIG. 11, 12), along with a hexagonal/Torx key that corresponds to the inner hexagonal/Torx (⑫, FIG. 7, 8) section for screwing.
